(19) Europäisches Patentamt / European Patent Office / Office européen des brevets

(11) **EP 2 931 583 B1**

(12) **EUROPEAN PATENT SPECIFICATION**

(45) Date of publication and mention
of the grant of the patent:
**20.09.2023   Bulletin 2023/38**

(21) Application number: **13864485.1**

(22) Date of filing: **27.11.2013**

(51) International Patent Classification (IPC):
**B60W 50/14** *(2020.01)*      **B60W 40/076** *(2012.01)*
**B60W 40/09** *(2012.01)*      **B60R 16/023** *(2006.01)*
**G07C 5/08** *(2006.01)*      **B60W 30/14** *(2006.01)*
**B60W 30/188** *(2012.01)*

(52) Cooperative Patent Classification (CPC):
**B60W 40/09; B60R 16/0236; B60W 30/143;
B60W 30/1882;** B60W 2050/146; B60W 2520/10;
B60W 2540/30; B60W 2552/15; B60W 2552/20;
B60W 2720/103; G07C 5/08; Y02T 10/84

(86) International application number:
**PCT/SE2013/051396**

(87) International publication number:
**WO 2014/098715 (26.06.2014 Gazette 2014/26)**

(54) **METHOD AND SYSTEM FOR ASSESSMENT OF DRIVER BEHAVIOUR DURING DRIVING OF VEHICLES**

VERFAHREN UND SYSTEM ZUR BEWERTUNG DES VERHALTENS EINES FAHRERS BEIM FAHREN EINES FAHRZEUGS

PROCÉDÉ ET SYSTÈME D'ÉVALUATION DE COMPORTEMENT DE CONDUCTEUR PENDANT LA CONDUITE DE VÉHICULES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.12.2012   SE 1251429**

(43) Date of publication of application:
**21.10.2015   Bulletin 2015/43**

(73) Proprietor: **Scania CV AB
151 87 Södertälje (SE)**

(72) Inventors:
• **BREDBERG, Linus
S-146 34 Tullinge (SE)**
• **LARSSON, Olof
S-127 43 Skärholmen (SE)**

(74) Representative: **Scania CV AB
Patents, GP 117kv
151 87 Södertälje (SE)**

(56) References cited:
**EP-A1- 2 335 964      EP-A1- 2 476 596
EP-A2- 2 441 634      EP-A2- 2 441 634
WO-A1-2007/139491      WO-A1-2010/059109
WO-A1-2010/059109      WO-A1-2010/144031
WO-A1-2012/158097**

## Description

TECHNICAL FIELD

The invention relates to a method for assessment of driver behaviour during hilltop driving of vehicles according to the preamble of claim 1. The invention relates to a system for assessment of driver behaviour during hilltop driving of vehicles according to the preamble of claim 6. The invention relates also to a motor vehicle. The invention also relates to a computer programme and a digital store medium.

BACKGROUND

Economical driving by efficient utilisation of the kinetic energy of vehicles such as trucks with a view to fuel saving is becoming increasingly common. One way of achieving it is to minimise the use of brakes on downhill runs, preferably by the driver releasing the accelerator in good time before the declivity and thereby throttling the fuel supply, with a consequent reduction in vehicle speed. This loss of speed is then recouped "gratis" downhill.

A known way of assessing hilltop driving is by seeing how much energy in the form of diesel fuel the engine uses before a declivity and comparing it with how much is gained downhill or is braked away or is gained at vehicle speeds above the speed limiter. Certain requirements also apply with regard to the profile of hills, e.g. that a declivity should be preceded by a climb at slower speeds in case the driver does not brake. This may mean that certain declivities on which some action should have been taken are not assessed, and vice versa.

A slope feedback device has been proposed in the international application WO 2010/059109 A1.

OBJECTS OF THE INVENTION

One object of the present invention is to propose a method for assessment of drivers' hilltop driving behaviour which enables good assessment of said behaviour with a view to improving it.

One object of the present invention is to propose a system for assessment of drivers' hilltop driving behaviour which enables good assessment of said behaviour with a view to improving it.

SUMMARY OF THE INVENTION

These and other objects indicated by the description set out below are achieved by a method, a system, a computer programme and a digital store medium of the kinds indicated in the introduction which further present the features indicated in the characterising parts of the attached independent claims, 1, 6, 12 and 13. Preferred embodiments of the method and the system are defined in the attached dependent claims 2-5 and 7-11.

The invention achieves the objects with a method for assessment of drivers' hilltop driving behaviour, comprising the steps of continually determining a vehicle's speed pattern during a hilltop driving process, of identifying forms of action taken by the vehicle's driver during said process, and of using vehicle speeds arising from the speed pattern thus defined as a basis for determining the results of the actions identified as having been taken by the driver. Good assessment of driver behaviour in hilltop driving is thus made possible in that the same assessment is possible for every type of declivity and hilltop configuration, resulting in an effective way of teaching drivers how to drive economically over a hilltop transition.

According to the method, said vehicle speeds arising from the speed pattern thus defined comprise a speed $v_{cut}$ upon reduction of power mobilisation and a highest speed $v_{max}$ and a lowest speed $v_{min}$ during the hilltop driving process. Good assessment of driver behaviour during the hilltop driving process is thus facilitated.

Further, the occurrence of braking during the hilltop driving process at the highest speed is represented as a theoretical speed increase corresponding to the brake energy. This makes it possible to assess driver behaviour during hilltop driving in such a way that braking downhill is taken into account and any unjustified braking makes it difficult for the assessment to show a good rating.

The determination of said results is based on at least the speed upon reduction of power mobilisation and said lowest speed during the hilltop driving process, making it possible to determine whether the driver's hilltop driving behaviour was economical on fuel.

The determination of said results is based on a desired speed reduction $v_{req}$ and an actual speed reduction $v_{dec}$, making it easy to determine the results.

Further, said actual speed reduction is defined as $v_{dec}=v_{cut}-v_{min}$, enabling effective determination of the actual speed reduction.

In one embodiment of the method said forms of action comprise reduction of power mobilisation and/or deactivation of the vehicle's cruise control function. Assessment of fuel-economising hilltop driving behaviour is thus made possible.

In one embodiment of the method said hilltop driving process is defined by actions in the form of reduction of power mobilisation and its subsequently increase or a subsequent uphill run for a certain time, or subsequent braking on a substantially level section or after a certain predetermined time. The result is a simple definition of when the hilltop driving process begins and ends to make it possible to determine speed patterns for said assessment of driving during said process.

In one embodiment of the method the results of the driver's actions are expressed in the form of a rating $g=v_{dec}/v_{req}*100$, thus providing a comparable value of the driver's behaviour during the hilltop driving process and thereby making it possible to assess whether his/her hilltop driving was economical on fuel.

In one embodiment of the method driver behaviour is not assessed if any of the following circumstances applied: speed increase $v_{max}$-$v_{min}$ below a predetermined value; energy gained downhill not above a predetermined value; vehicle initial speed not above a predetermined value; and final speed not above a predetermined value. Nor is there any assessment if the driver braked so hard that the vehicle's speed dropped markedly. This means that driver behaviour is not assessed unnecessarily, i.e. where assessment is not required.

The invention achieves the objects with a system for assessment of drivers' hilltop driving behaviour, comprising means for continually determining a vehicle's speed pattern during a hilltop driving process, means for identifying forms of action taken by the vehicle's driver during said process, and means for using vehicle speeds arising from the speed pattern thus defined as a basis for determining the results of the actions identified as having been taken by the driver. Good assessment of driver behaviour in hilltop driving is thus made possible in that the same assessment is possible for every type of declivity and hilltop configuration, resulting in an effective way of teaching drivers how to drive economically over a hilltop transition.

In the system, said vehicle speeds arising from the speed pattern thus defined comprise a speed $v_{cut}$ upon reduction of power mobilisation and a highest speed $v_{max}$ and a lowest speed $v_{min}$ during the hilltop driving process. Good assessment of driver behaviour during the hilltop driving process is thus facilitated.

Further, the occurrence of braking during the hilltop driving process at the highest speed is represented as a theoretical speed increase corresponding to the brake energy. This makes it possible to assess driver behaviour during hilltop driving in such a way that braking downhill is taken into account and any unjustifed braking makes it difficult for the assessment to show a good rating.

In the system, the determination of said results is based on at least the speed upon reduction of power mobilisation and said lowest speed during the hilltop driving process, making it possible to determine whether the driver's hilltop driving behaviour was economical on fuel.

Further, the determination of said results is based on a desired speed reduction $v_{req}$ and an actual speed reduction $v_{dec}$, making it easy to determine the results.

Further, said actual speed reduction is arranged to be as $v_{dec}=v_{cut}-v_{min}$, enabling effective determination of the actual speed reduction.

In one embodiment of the system said forms of action comprise reduction of power mobilisation and/or deactivation of the vehicle's cruise control function. Assessment of fuel-economising hilltop driving behaviour is thus made possible.

In one embodiment of the system said hilltop driving process is arranged to be defined by actions in the form of reduction of power mobilisation and its subsequently increase or a subsequent uphill run for a certain time, or subsequent braking on a substantially level section or after a certain predetermined time. The result is a simple definition of when the hilltop driving process begins and ends to make it possible to determine speed patterns for said assessment of hilltop driving during the hilltop driving process.

In one embodiment of the system the results of the driver's actions are expressed in the form of a rating $g=v_{dec}/v_{req}*100$, thus providing a comparable value of the driver's behaviour during the hilltop driving process and thereby making it possible to assess whether his/her hilltop driving was economical on fuel.

In one embodiment of the system driver behaviour is not assessed if any of the following circumstances applied: speed increase $v_{max}$-$v_{min}$ below a predetermined value; energy gained downhill not above a predetermined value; vehicle initial speed not above a predetermined value; and final speed not above a predetermined value. Nor there will be any assessment if the driver braked so hard that the vehicle's speed dropped markedly. This means that driver behaviour is not assessed unnecessarily, i.e. where assessment is not required.

DESCRIPTION OF DRAWINGS

The present invention will be better understood by reading the detailed description set out below in conjunction with the attached drawings, in which the same reference notations are used for similar items throughout the various views, and

Fig. 1 schematically illustrates a motor vehicle according to an embodiment of the present invention,

Fig. 2 is a schematic block diagram of a system I for assessment of driver's hilltop driving behaviour according to an embodiment of the present invention,

Fig. 3 schematically illustrates an example of a hilltop driving process according to the present invention,

Fig. 4 is a schematic block diagram of a method for assessment of drivers' hilltop driving behaviour according to the present invention (not-complete), and

Fig. 5 schematically illustrates a computer according to an embodiment of the present invention.

DESCRIPTION OF EMBODIMENTS

Desired consideration means choice of subconditions, i.e. no need to take into account all the subconditions but the possibility of taking any desired number of them.

The term "link" refers herein to a communication link which may be a physical connection such as an optoelectronic communication line, or a non-physical connection such as a wireless connection, e.g. a radio link or microwave link.

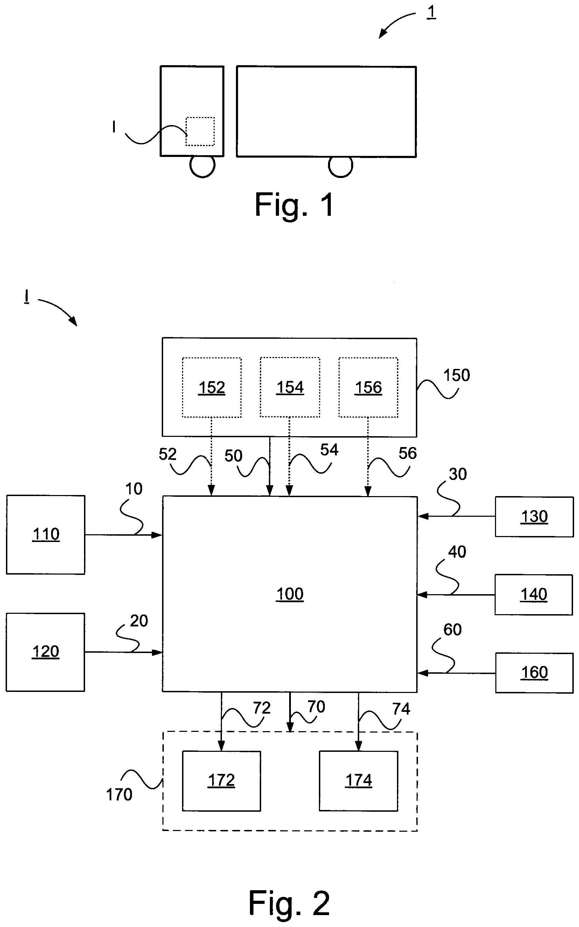

Fig. 1 illustrates schematically a motor vehicle 1 according to an embodiment of the present invention. The vehicle exemplified is a heavy vehicle in the form of a truck but might alternatively be any suitable vehicle, e.g. a bus or a car. The vehicle is provided with a system I according to the present invention.

Fig. 2 is a schematic block diagram of a system I for guidance of driver behaviour during driving of motor vehicles according to an embodiment of the present invention.

The system I comprises an electronic control unit 100 for said guidance.

The system I comprises speed determination means 110 for continually determining the vehicle's speed. Said means 110 comprises in one variant speedometer means.

The system I comprises power mobilisation determination means 120 for determining amounts of power mobilisation. Said means 120 comprises in one variant accelerator pedal position determination means for determining whether and, if so, to what extent, i.e. to what position, the accelerator pedal is depressed.

The system I further comprises cruise control function determination means 130 for determining whether the vehicle's cruise control function is activated, i.e. whether the vehicle's cruise control is activated. Said means 130 in one variant is configured to determine whether the vehicle's cruise control function as regards cruise control comprising hilltop driving adaptation is activated.

The system I further comprises vehicle mode determination means 140 for determining which vehicle mode the vehicle is in, where said vehicle mode comprises mode focused on operability, herein called performance mode, in which fuel economy is subordinate, and mode focused on economical operation, herein called economy mode.

The system I further comprises brake activation determination means 150 for determining whether, and if so, to what extent brake means of the vehicle were activated during the hilltop driving process, in order thereby to determine accumulated brake energy.

Said means 150 comprise service brake determination means 152 for determining whether, and if so, to what extent service brake means, e.g. foot brakes, were used during the respective hilltop driving process.

Said means 150 further comprise auxiliary brake determination means 154 for determining whether, and if so, to what extent auxiliary brake means, e.g. retarders, were used during the respective hilltop driving process.

Said means 150 further comprise engine brake determination means 156 for determining whether, and if so, to what extent engine brake means were used during the respective hilltop driving process.

The system I further comprises running resistance determination means 160 for determining running resistance during the hilltop driving process, in order thereby to identify a point where the running resistance becomes negative, i.e. where the force of gravity exceeds the force of the running resistance downhill so that no propulsive force from the engine need be supplied, since the gradient of the declivity will "push" the vehicle on. Said means 160 comprises calculation means using equations to determine the point where the running resistance becomes negative.

The system I further comprises receiving means for hilltop driving determination 170 to receive information concerning assessments of braking processes.

Said means 170 comprise a vehicle display unit 172 situated in the vehicle's instrument cluster to provide the driver with information about the assessment of the respective hilltop driving process to enable him/her to immediately appreciate his/her hilltop driving behaviour.

Said means 170 comprise a separate receiving unit 174 to receive and record assessments of driver behaviour during hilltop driving processes. There may also be such receiving units at the premises of the haulage operator to enable the latter to see the results of assessments of driver behaviour during hilltop driving processes.

The electronic control unit 100 is signal-connected to said speed determination means 110 via a link 10 enabling it to receive from said means 110 a signal which represents data on the vehicle's speed.

The electronic control unit 100 is signal-connected to said power mobilisation determination means 120 via a link 20 enabling it to receive from said means 120 a signal which represents data for determining amounts of power mobilisation.

The electronic control unit 100 is signal-connected to said cruise control function determination means 130 via a link 30 enabling it to receive from said means 130 a signal which represents data for determining whether the vehicle's cruise control function is activated.

The electronic control unit 100 is signal-connected to said vehicle mode determination means 140 via a link 40 enabling it to receive from said means 140 a signal which represents data on which mode the vehicle is in, i.e. performance mode or economy mode.

The electronic control unit 100 is signal-connected to said brake activation determination means 150 via a link 50 enabling it to receive from said means 150 a signal which represents data on which types of brake means are used and to what extent during the hilltop driving process, in order to determine accumulated brake energy.

The electronic control unit 100 is signal-connected to said service brake determination means 152 via a link 52 enabling it to receive from said means 152 a signal which represents data on the extent to which service brake means are used during the hilltop driving process.

The electronic control unit 100 is signal-connected to said auxiliary brake determination means 154 via a link 54 enabling it to receive from said means 154 a signal which represents data on the extent to which auxiliary brake means are used during the hilltop driving process.

The electronic control unit 100 is signal-connected to said engine brake determination means 156 via a link 56 enabling it to receive from said means 156 a signal which represents data on the extent to which engine brake means are used during the hilltop driving process.

The electronic control unit 100 is signal-connected to said running resistance determination means 160 via a link 60 enabling it to receive from said means 160 a signal which represents data for identifying points where the running resistance became negative.

The electronic control unit 100 is signal-connected to said receiving means for hilltop driving determination 170 via a link 70. The electronic control unit 100 is adapted to send a signal to said means 170 via a link 70, where said signal represents assessment data on the results of driver behaviour during the hilltop driving process.

The electronic control unit 100 is signal-connected to said vehicle display unit 172 via a link 72. The electronic control unit 100 is adapted to send a signal to said means 172 via a link 72, where said signal represents assessment data on the results of driver behaviour during the hilltop driving process.

The electronic control unit 100 is signal-connected to said receiving unit 174 via a link 74. The electronic control unit 100 is adapted to send a signal to said means 174 via a link 74, where said signal represents assessment data on the results of driver behaviour during the hilltop driving process.

The electronic control unit 100 is adapted to identifying forms of action taken by the driver before transitions to hilltops, in order thereby to identify the initiation of a hilltop driving process.

The electronic control unit 100 is adapted accordingly to processing said power mobilisation data in order to determine that the driver reduced the power mobilisation by releasing the accelerator pedal before the transition to a hilltop. The electronic control unit is adapted accordingly to processing said cruise control activation data in order to determine whether the driver deactivated the vehicle's cruise control function. If the driver does not release the accelerator pedal, i.e. does not reduce the power mobilisation, or does not deactivate the cruise control, the estimated running resistance is taken into account. If no speed reducing action took place before the transition to the hilltop, the speed reduction before the declivity will be zero, with a consequently bad result/rating.

The electronic control unit 100 is adapted to identifying forms of action taken by the driver, in order thereby to identify the end of the hilltop driving process. It is adapted accordingly to processing said power mobilisation data in order to establish that the driver increased the power mobilisation by pressing the accelerator pedal, and thereby to identify the end of the hilltop driving process.

The electronic control unit 100 is adapted to processing said running resistance data in order to identify points where the running resistance $F_{res}$ becomes negative, i.e. where $F_{res}<0$. It is further adapted to processing said running resistance data in order to determine the energy $W_{brake}$ gained on the declivity, which energy is continually accumulated downhill where the running resistance is negative. $W_{brake}$ is defined as

$$W_{res} = \int F_{res<0}(t) \cdot v(t)$$

in which $F_{res<0}(t)$ is negative running resistance versus time and $v(t)$ is vehicle speed versus time.

The electronic control unit 100 is adapted to processing said speed data in order to determine the vehicle's speed pattern during the hilltop driving process. It is adapted to processing said data in order to determine the speed at the initiation of the hilltop driving process, the initial speed, which in one variant is the speed upon reduction of power mobilisation, $v_{cut}$, before the transition to a hilltop.

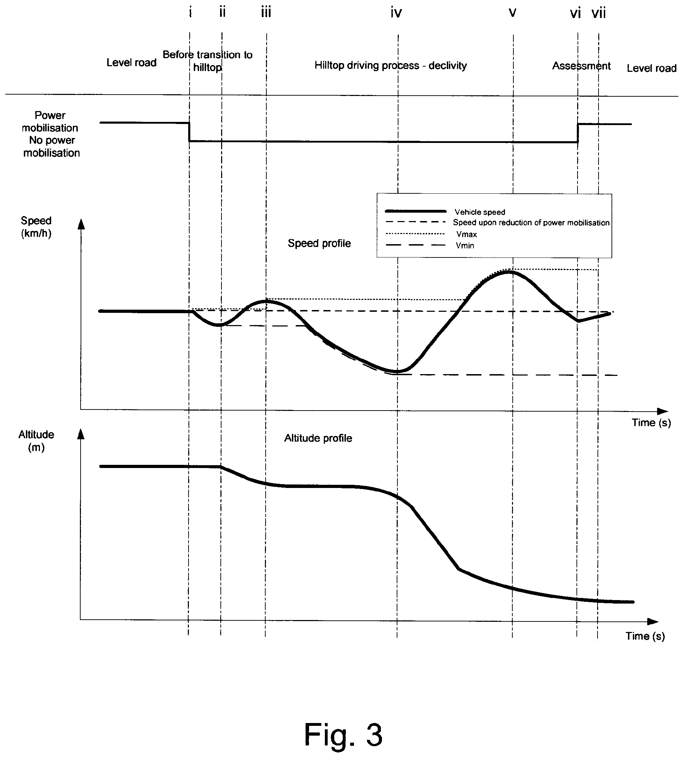

The electronic control unit 100 is adapted to processing said speed data in order to determine the highest speed $v_{max}$ and the lowest speed $v_{min}$ during the hilltop driving process. The lowest speed occurs at a point where the running resistance $F_{res}$ changes from positive to negative, which may take place several times during a hilltop driving process, see Fig. 3.

The electronic control unit 100 is also adapted in one variant determining how long time before a hilltop the driver reduced the power mobilisation, i.e. eased off or released the accelerator pedal. It is adapted to determining the highest speed continually during the hilltop driving process.

The electronic control unit 100 is adapted to processing said brake data comprising said service brake data, auxiliary brake data and/or engine brake data, in order to determine whether and, if so, to what extent braking took place during the hilltop driving, in order to determine accumulated brake energy. The brake energy is defined as

$$W_{brake} = \int F_{brake}(t) \cdot v(t)$$

in which $F_{brake}(t)$ is the brake force versus time and $v(t)$ the vehicle's speed versus time.

The electronic control unit 100 is adapted to using said brake energy determined as a basis for determining a theoretical speed increase corresponding to the brake energy, which theoretical speed thus determined represents the highest speed. The occurrence of braking during the hilltop driving process at the highest speed is consequently represented as a theoretical speed increase corresponding to said brake energy.

$$v_{brake} = K \cdot \sqrt{\frac{2 \cdot W_{brake}}{m}}$$

in which K is an adjustable penalty factor which also compensates for air resistance and rolling resistance and m is the vehicle's weight. By adjusting K it is possible for $v_{brake}$ to be adapted so that braking downhill results in greater need for the driver to reduce power mobilisation, i.e. to cut the acceleration, before the declivity. This means that it becomes more difficult to score good points if the driver brakes on a downhill run.

The electronic control unit 100 is adapted to processing said speed data in order to determine speed increases during the hilltop driving process, and in one variant the speed increase is determined as the difference between said highest speed $v_{max}$ determined and said lowest speed $v_{min}$ determined.

The electronic control unit 100 is adapted to determining whether said speed increase $v_{max}$-$v_{min}$ is below a predetermined value which might depend on $v_{cut}$, e.g. for good ratings a smaller speed increase is required at high speeds. Driver behaviour is not assessed if the speed increase is below said predetermined value, since such a small speed increase is then not classified as being assessable.

The electronic control unit is further adapted to determining whether said energy $W_{res}$ gained downhill is above a predetermined value. Driver behaviour is not assessed if said energy $W_{res}$ is below said predetermined value, since it is then not classified as being assessable.

The electronic control unit 100 is further adapted to determining whether said initial speed, which in one variant is the speed upon reduction of power mobilisation, $v_{cut}$, is above a predetermined value. Driver behaviour is not assessed if the initial speed is below said predetermined value, since such a low initial speed is then not classified as being assessable.

The electronic control unit 100 is further adapted to determining whether the final speed is above a predetermined value. Driver behaviour is not assessed if the final speed, i.e. the highest speed $v_{max}$, is below said predetermined value, since such a low final speed is then not classified as being assessable.

The electronic control unit is adapted to determining the desired speed reduction $v_{req}$, defined as

$$v_{req} = \min(C_1 \cdot v_{cut}, C_2 \cdot (v_{max} - v_{min}))$$

in which C1 is a factor which in one embodiment is 0.05, i.e. 5% of the vehicle's speed, and C2 is a factor which in one embodiment is of the order of 0.45, i.e. 45% of the speed. In this case whichever of $C_1$*$V_{cut}$ and $C_2$*($V_{max}$-$V_{min}$) is lower is chosen. When driving for example at 80 km/h and rolling up 8 km/h on the declivity, a reduction required for a good rating will be min(80*0.05; 0.45*8) = min (4; 3.6) = 3.6.

The electronic control unit is adapted to determining an actual speed reduction defined as $v_{dec}$=$v_{cut}$-$v_{min}$.

The electronic control unit is adapted to determining results on the basis of the desired speed reduction and the actual speed reduction. The results of the actions taken by the driver during the hilltop driving process are expressed in the form of a rating g=$v_{dec}$/$v_{req}$*100. It is adapted accordingly to determining the rating g for the hilltop driving process by calculating g=$v_{dec}$/$v_{req}$*100, in which g $\varepsilon$ [0 100].

The electronic control unit 100 is then adapted to sending to said receiving means for hilltop driving determination 170 via the link 70 a signal which represents data on the results of driver behaviour during the hilltop driving process, comprising in one variant said rating g.

Fig. 3 illustrates schematically an example of a hilltop driving process according to the present invention.

In the hilltop driving process the vehicle travels along an itinerary with a speed profile where a level section of road is followed by a first declivity which then levels out before a steeper second declivity which subsequently levels out.

In the hilltop driving process the driver takes action at location (i) by reduction of power mobilisation, preferably by completely releasing the accelerator pedal, before the transition to the hilltop before the first declivity. The hilltop driving process is thus initiated and the speed $v_{cut}$ at the time of the initiation is recorded.

During driving before the hilltop transition with reduced power mobilisation the vehicle's speed drops to a first $v_{min}$ at location (ii) where the first declivity begins.

The speed then increases on the first declivity to a first $v_{max}$ at (iii) where the running resistance is consequently negative, with the result that energy is gained between (ii) and (iii).

Continuing to drive the vehicle without power mobilisation results, when the road levels out after the first declivity, in its speed decreasing to a second $v_{min}$ which is lower than said first $v_{min}$ until the vehicle begins to roll down for the second declivity at location (iv).

The speed on the second declivity then increases from location (iv) to location (v) where a second $v_{max}$ is reached which is higher than said first $v_{max}$ and the running resistance is consequently negative, with the result that energy is gained between (iv) and (v).

The road then levels out at location (v) and the power mobilisation is increased at location (vi) by the driver depressing the accelerator pedal. It is thus identified that the hilltop driving process has ended, and an assessment is made at location (vii) on the basis of the lowest $v_{min}$ and highest $v_{max}$ and taking them into account by calculations as above.

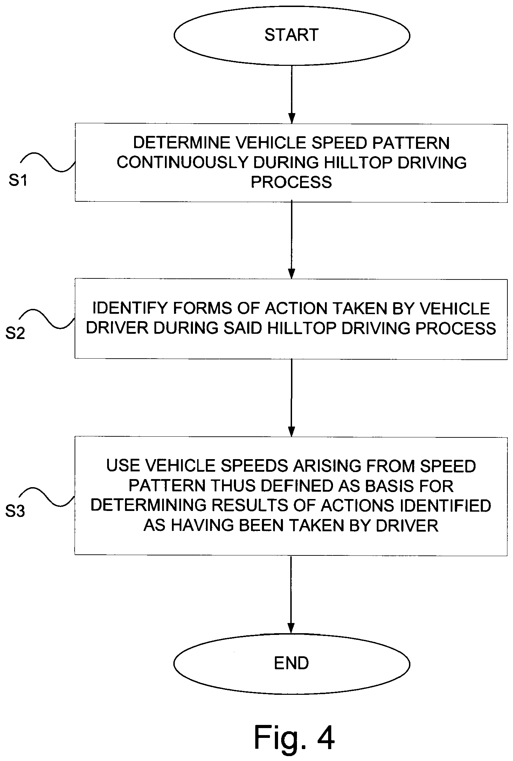

Fig. 4 is a schematic block diagram of a method for assessment of drivers' hilltop driving behaviour according to the present invention (does not comprise all features of the independent claims).

In one embodiment the method for assessment of drivers' hilltop driving behaviour comprises a first step S1 in which a vehicle's speed pattern is continually determined during a hilltop driving process.

In one embodiment the method for assessment of drivers' hilltop driving behaviour comprises a second step S2 in which forms of action taken by the vehicle's driver during said process are determined.

In one embodiment the method for assessment of drivers' hilltop driving behaviour comprises a second step S3 in which the results of the actions identified as having been taken by the driver are determined on the basis of vehicle speeds arising from the speed pattern thus defined.

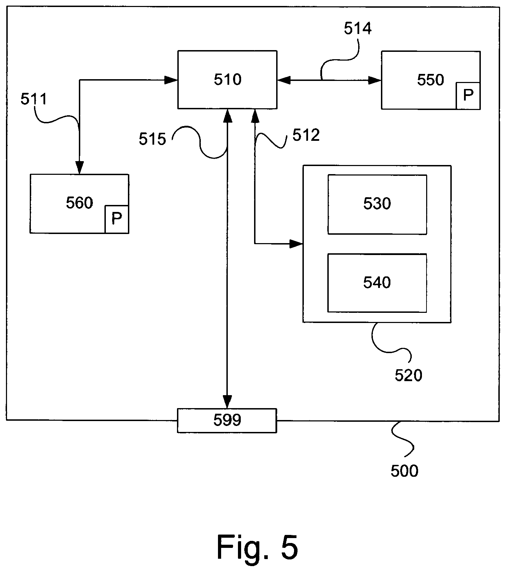

Fig. 5 is a diagram of one version of a device 500. The control unit 100 described with reference to Figure 2 may in one version comprise the device 500. The device 500 comprises a non-volatile memory 520, a data processing unit 510 and a read/write memory 550. The non-volatile memory has a first memory element 530 in which a computer programme, e.g. an operating system, is stored for controlling the function of the device 500. The device 500 further comprises a bus controller, a serial communication port, I/O means, an A/D converter, a time and date input and transfer unit, an event counter and an interruption controller (not depicted). The non-volatile memory has also a second memory element 540.

A proposed computer programme P comprises routines for assessment of drivers' hilltop driving behaviour according to the innovative method. The programme comprises routines for determining a vehicle's speed pattern continually during a hilltop driving process. It comprises routines for identifying forms of action taken by the vehicle's driver during said process. It comprises routines for using vehicle speeds arising from the speed pattern thus defined as a basis for determining the results of the actions identified as having been taken by the driver. The programme P may be stored in an executable form or in compressed form in a memory 560 and/or in read/write memory 550.

Where the data processing unit 510 is described as performing a certain function, it means that it conducts a certain part of the programme stored in the memory 560, or a certain part of the programme stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit via a data bus 511. The read/write memory 550 is adapted to communicating with the data processing unit via a data bus 514. The links associated for example with the control unit 100 may be connected to the data port.

When data are received on the data port 599, they are stored temporarily in the second memory element 540. When input data received have been temporarily stored, the data processing unit 510 is prepared to conduct code execution as described above. The signals received on the data port may be used by the device 500 to determine a vehicle's speed pattern continually during a hilltop driving process. The signals received on the data port may be used by the device 500 to determine forms of action taken by the vehicle's driver during said process. The signals received on the data port may be used by the device 500 to determine, on the basis of vehicle speeds arising from the speed pattern thus defined, the results of the actions identified as having been taken by the driver.

Parts of the methods herein described may be conducted by the device 500 by means of the data processing unit 510 which runs the programme stored in the memory 560 or the read/write memory 550. When the device 500 runs the programme, methods herein described are executed.

The above description of the preferred embodiments of the present invention is provided for illustrative and descriptive purposes. It is not intended to be exhaustive, nor to restrict the invention to the variants described. Many modifications and variations will obviously suggest themselves to one skilled in the art. The embodiments have been chosen and described in order best to explain the principles of the invention and their practical applications and thereby make it possible for one skilled in the art to understand the invention for different embodiments and with the various modifications appropriate to the intended use. The invention is only limited within the scope of the appended claims.

## Claims

1. A method for assessment of driver behaviour during hilltop driving of vehicles (1), comprising the steps of determining (S1) a vehicle's speed pattern continually during a hilltop driving process, of identifying (S2) forms of action taken by the vehicle's driver during said process, and of using (S3) vehicle speeds arising from the speed pattern thus defined as a basis for determining an assessment of the actions identified as having been taken by the driver in which method:

   - said vehicle speeds arising from the speed pattern thus defined comprise speed upon reduction of power mobilisation ($v_{cut}$) and the respective highest speed ($v_{max}$) and lowest speed ($v_{min}$) during the hilltop driving process; the method being **characterized by** the steps of:
- the occurrence of braking during the hilltop driving process at the highest speed ($V_{max}$) is represented as a theoretical speed increase corresponding to the brake energy ($W_{brake}$);
- determining said assessment is based on at least the speed ($v_{cut}$) upon reduction of power mobilisation and said lowest speed ($V_{min}$) during the hilltop driving process;
- determining said assessment is further based on a desired speed reduction ($v_{req}$) and an actual speed reduction ($v_{dec}$);
and
- said actual speed reduction ($V_{dec}$) is defined as $v_{dec}=v_{cut}-v_{min}$.

**2.** A method according to claim 1, in which said forms of action comprise reduction of power mobilisation and/or deactivation of the vehicle's cruise control function.

**3.** A method according to claim 1 or 2, in which said hilltop driving process is defined by actions in the form of reduction of power mobilisation and its subsequent increase or subsequent uphill run for a certain time, or subsequent braking on a substantially level section or after a certain predetermined time.

**4.** A method according to any one of claims 1-3, in which the assessment of the driver's actions is expressed in the form of a rating $g=v_{dec}/v_{req}*100$.

**5.** A method according to any one of claims 1-4, in which driver behaviour is not assessed if any of the following circumstances applied:

- speed increase $v_{max}-v_{min}$ below a predetermined value,
- energy gained ($W_{res}$) downhill not above a predetermined value,
- vehicle initial speed ($v_{cut}$) not above a predetermined value, and
- final speed ($v_{max}$) not above a predetermined value.

**6.** A system (I) for assessment of driver behaviour during hilltop driving behaviour (1), comprising means (100, 110) for determining a vehicle's speed pattern continually during a hilltop driving process, means (100, 120, 130) for identifying forms of action taken by the vehicle's driver during said process, and means (100, 110, 120, 130, 140, 150, 160) for using vehicle speeds arising from the speed pattern thus defined as a basis for determining an assessment of the actions identified as having been taken by the driver, in which system:

- said vehicle speeds arising from the speed pattern thus defined comprise speed upon reduction of power mobilisation ($v_{cut}$) and the respective highest speed ($v_{max}$) and lowest speed ($v_{min}$) during the hilltop driving process; the system being **characterized by**:

- the occurrence of braking during the hilltop driving process at the highest speed ($V_{max}$) is represented as a theoretical speed increase corresponding to the brake energy ($W_{brake}$);
- determining said assessment is based on at least the speed ($v_{cut}$) upon reduction of power mobilisation and said lowest speed ($v_{min}$) during the hilltop driving process;
- determining said assessment is based on a desired speed reduction ($v_{req}$) and an actual speed reduction ($v_{dec}$);
and
- said actual speed reduction ($V_{dec}$) is arranged to be as $v_{dec}=v_{cut}-v_{min}$.

**7.** A system according to claim 6, in which said forms of action comprise reduction of power mobilisation and/or deactivation of the vehicle's cruise control function.

**8.** A system according to claim 6 or 7, in which said hilltop driving process is arranged to be defined by actions in the form of reduction of power mobilisation and its subsequent increase or subsequent uphill run for a certain time, or subsequent braking on a substantially level section or after a certain predetermined time.

**9.** A system according to any one of claims 6-8, in which the assessment of the driver's actions is expressed in the form of a rating $g=v_{dec}/v_{req}*100$.

**10.** A system according to any one of claims 6-9, in which driver behaviour is not assessed if any of the following circumstances applied:

- speed increase $v_{max}-v_{min}$ below a predetermined value,
- energy gained ($W_{res}$) downhill not above a predetermined value,
- vehicle initial speed ($V_{cut}$) not above a predetermined value, and
- final speed ($V_{max}$) not above a predetermined value.

**11.** A motor vehicle (1) provided with a system (I) according to any one of claims 6-10.

**12.** A computer programme (P) for assessment of drivers' hilltop driving behaviour, which programme (P) comprises programme code which, when run by an electronic control unit (100) or another computer (500) connected to the electronic control unit (100), enables the electronic control unit (100) to perform steps according to claims 1-5.

13. A digital storage medium which stores the computer programme according to claim 12

**Patentansprüche**

1. Verfahren zum Bewerten des Fahrerverhaltens beim Bergfahren von Fahrzeugen (1), das die folgenden Schritte umfasst: kontinuierliches Bestimmen (S1) eines Geschwindigkeitsmusters eines Fahrzeugs während eines Bergfahrvorgangs, Feststellen (S2) von Formen von Maßnahmen, die vom Fahrer des Fahrzeugs während des Vorgangs ausgeführt werden, und Verwenden (S3) von Fahrzeuggeschwindigkeiten, die sich aus dem derart definierten Geschwindigkeitsmuster ergeben, als Grundlage für das Bestimmen einer Bewertung der als vom Fahrer ausgeführt festgestellten Maßnahmen, wobei in dem Verfahren:

    - die Fahrzeuggeschwindigkeiten, die sich aus dem derart definierten Geschwindigkeitsmuster ergeben, die Geschwindigkeit bei Verringerung der Leistungsbereitstellung ($v_{cut}$) und die jeweilige Höchstgeschwindigkeit ($v_{max}$) und die niedrigste Geschwindigkeit ($V_{min}$) während des Bergfahrvorgangs umfassen, wobei das Verfahren durch die folgenden Schritte gekennzeichnet ist:

        - das Auftreten einer Bremsung während des Bergfahrvorgangs mit der Höchstgeschwindigkeit ($v_{max}$) wird als eine theoretische Erhöhung der Geschwindigkeit dargestellt, die der Bremsenergie ($W_{brake}$) entspricht;
        - das Bestimmen der Bewertung basiert wenigstens auf der Geschwindigkeit ($v_{cut}$) bei Verringerung der Leistungsbereitstellung und der niedrigsten Geschwindigkeit ($v_{min}$) während des Bergfahrvorgangs;
        - das Bestimmen der Bewertung basiert ferner auf einer gewünschten Verringerung der Geschwindigkeit ($v_{req}$) und einer tatsächlichen Verringerung der Geschwindigkeit ($v_{dec}$);
        und
        - die tatsächliche Verringerung der Geschwindigkeit ($v_{dec}$) ist definiert als $v_{dec}=v_{cut}-v_{min}$.

2. Verfahren nach Anspruch 1, wobei die Formen von Maßnahmen eine Verringerung der Leistungsbereitstellung und/oder Deaktivierung der Geschwindigkeitsregelfunktion des Fahrzeugs umfassen.

3. Verfahren nach Anspruch 1 oder 2, wobei der Bergfahrvorgang durch Maßnahmen in Form einer Verringerung der Leistungsbereitstellung und ihrer anschließenden Steigerung oder einer anschließenden Bergauffahrt für eine gewisse Zeit oder einer anschließenden Bremsung in einem im Wesentlichen ebenen Abschnitt oder nach einer gewissen vorbestimmten Zeit definiert ist.

4. Verfahren nach einem der Ansprüche 1-3, wobei die Bewertung der Maßnahmen des Fahrers in Form einer Beurteilung $g=v_{dec}/v_{req}*100$ ausgedrückt wird.

5. Verfahren nach einem der Ansprüche 1-4, wobei das Fahrerverhalten nicht bewertet wird, wenn einer der folgenden Umstände zutrifft:

    - Erhöhung der Geschwindigkeit $v_{max}$-$v_{min}$ unterhalb eines vorbestimmten Werts,
    - bergab gewonnene Energie ($W_{res}$) nicht über einem vorbestimmten Wert,
    - Ausgangsgeschwindigkeit des Fahrzeugs ($v_{cut}$) nicht über einem vorbestimmten Wert und
    - Endgeschwindigkeit ($v_{max}$) nicht über einem vorbestimmten Wert.

6. System (I) zum Bewerten des Fahrerverhaltens während des Bergfahrverhaltens (1), das umfasst: Einrichtungen (100, 110) zum kontinuierlichen Bestimmen eines Geschwindigkeitsmusters eines Fahrzeugs während eines Bergfahrvorgangs, Einrichtungen (100, 120, 130) zum Feststellen von Formen von Maßnahmen, die vom Fahrer des Fahrzeugs während des Vorgangs ausgeführt werden, und Einrichtungen (100, 110, 120, 130, 140, 150, 160) zum Verwenden von Fahrzeuggeschwindigkeiten, die sich aus dem derart definierten Geschwindigkeitsmuster ergeben, als Grundlage für das Bestimmen einer Bewertung der als vom Fahrer ausgeführt festgestellten Maßnahmen, wobei in dem System:

    - die Fahrzeuggeschwindigkeiten, die sich aus dem derart definierten Geschwindigkeitsmuster ergeben, die Geschwindigkeit bei Verringerung der Leistungsbereitstellung ($v_{cut}$) und die jeweilige Höchstgeschwindigkeit ($v_{max}$) und die niedrigste Geschwindigkeit ($V_{min}$) während des Bergfahrvorgangs umfassen, wobei das System **dadurch gekennzeichnet ist, dass**:
    - das Auftreten einer Bremsung während des Bergfahrvorgangs mit der Höchstgeschwindigkeit ($v_{max}$) als eine theoretische Erhöhung der Geschwindigkeit dargestellt wird, die der Bremsenergie ($W_{brake}$) entspricht;

- das Bestimmen der Bewertung wenigstens auf der Geschwindigkeit ($v_{cut}$) bei Verringerung der Leistungsbereitstellung und der niedrigsten Geschwindigkeit ($v_{min}$) während des Bergfahrvorgangs basiert;

- das Bestimmen der Bewertung ferner auf einer gewünschten Verringerung der Geschwindigkeit ($v_{req}$) und einer tatsächlichen Verringerung der Geschwindigkeit ($v_{dec}$) basiert; und

- die tatsächliche Verringerung der Geschwindigkeit ($v_{dec}$) derart ausgelegt ist, dass $v_{dec}=v_{cut}-v_{min}$.

7. System nach Anspruch 6, wobei die Formen von Maßnahmen eine Verringerung der Leistungsbereitstellung und/oder Deaktivierung der Geschwindigkeitsregelfunktion des Fahrzeugs umfassen.

8. System nach Anspruch 6 oder 7, wobei der Bergfahrvorgang derart ausgelegt ist, dass er durch Maßnahmen in Form einer Verringerung der Leistungsbereitstellung und ihrer anschließenden Steigerung oder einer anschließenden Bergauffahrt für eine gewisse Zeit oder einer anschließenden Bremsung in einem im Wesentlichen ebenen Abschnitt oder nach einer gewissen vorbestimmten Zeit definiert ist.

9. System nach einem der Ansprüche 6-8, wobei die Bewertung der Maßnahmen des Fahrers in Form einer Beurteilung $g=v_{dec}/v_{req}*100$ ausgedrückt wird.

10. System nach einem der Ansprüche 6-9, wobei das Fahrerverhalten nicht bewertet wird, wenn einer der folgenden Umstände zutrifft:

- Erhöhung der Geschwindigkeit $v_{max}-v_{min}$ unterhalb eines vorbestimmten Werts,
- bergab gewonnene Energie ($W_{res}$) nicht über einem vorbestimmten Wert,
- Ausgangsgeschwindigkeit des Fahrzeugs ($v_{cut}$) nicht über einem vorbestimmten Wert und
- Endgeschwindigkeit ($v_{max}$) nicht über einem vorbestimmten Wert.

11. Kraftfahrzeug (1) mit einem System (1) nach einem der Ansprüche 6-10.

12. Computerprogramm (P) zum Bewerten des Fahrerverhaltens beim Bergfahren, wobei das Programm (P) einen Programmcode umfasst, der die elektronische Steuereinheit (100) dazu befähigt, die Schritte nach Anspruch 1-5 durchzuführen, wenn er von einer elektronischen Steuereinheit (100) oder einem sonstigen mit der elektronischen Steuereinheit (100) verbundenen Computer (500) ausgeführt wird.

13. Digitales Speichermedium, auf dem das Computerprogramm nach Anspruch 12 gespeichert ist.

**Revendications**

1. Procédé d'évaluation du comportement du conducteur pendant la conduite en côte de véhicules (1), comprenant les étapes consistant à déterminer (S1) un modèle de vitesse du véhicule de manière continue pendant un processus de conduite en côte, à identifier (S2) des formes d'action prises par le conducteur du véhicule pendant ledit processus, et à utiliser (S3) les vitesses du véhicule provenant du modèle de vitesse ainsi défini comme base pour déterminer une évaluation des actions identifiées comme ayant été prises par le conducteur, dans lequel procédé :

- lesdites vitesses de véhicule résultant du modèle de vitesse ainsi défini comprennent la vitesse lors de la réduction de la mobilisation de puissance ($v_{cut}$) et la vitesse la plus élevée ($v_{max}$) et la vitesse la plus basse ($v_{min}$) respectives pendant le processus de conduite en côte ; le procédé étant **caractérisé par** les étapes de :

- l'occurrence d'un freinage pendant le processus de conduite en côte à la vitesse la plus élevée ($V_{max}$) est représentée comme une augmentation de vitesse théorique correspondant à l'énergie de freinage ($W_{brake}$) ;
- la détermination de ladite évaluation est basée sur au moins la vitesse ($v_{cut}$) lors de la réduction de la mobilisation de puissance et ladite vitesse la plus basse ($V_{min}$) pendant le processus de conduite en côte ;
- la détermination de ladite évaluation est en outre basée sur une réduction de vitesse souhaitée ($v_{req}$) et une réduction de vitesse réelle ($v_{dec}$) ; et
- ladite réduction de vitesse réelle ($V_{dec}$) est définie comme $V_{dec}=V_{cut}-V_{min}$.

2. Procédé selon la revendication 1, dans lequel lesdites formes d'action comprennent la réduction de la mobilisation de puissance et/ou la désactivation de la fonction de régulation de vitesse du véhicule.

3. Procédé selon la revendication 1 ou 2, dans lequel ledit processus de conduite en côte est défini par des actions sous la forme d'une réduction de la mobilisation de la puissance et de son augmentation ultérieure ou d'un parcours en amont ultérieur pendant un certain temps, ou d'un freinage ultérieur sur une section sensiblement plane ou après un certain temps prédéterminé.

4. Procédé selon l'une quelconque des revendications 1 à 3, dans lequel l'évaluation des actions du conducteur est exprimée sous la forme d'une évaluation $g=v_{dec}/v_{req}*100$ .

5. Procédé selon l'une quelconque des revendications 1 à 4, dans lequel le comportement du conducteur n'est pas évalué si l'une quelconque des circonstances suivantes est appliquée :

   - l'augmentation de vitesse $v_{max}$-$v_{min}$ en dessous d'une valeur prédéterminée,
   - l'énergie gagnée ($W_{res}$) en côte ne dépassant pas une valeur prédéterminée,
   - la vitesse initiale du véhicule ($v_{cut}$) ne dépassant pas une valeur prédéterminée, et
   - la vitesse finale ($v_{max}$) ne dépassant pas une valeur prédéterminée.

6. L'invention concerne un système (I) permettant d'évaluer le comportement de conduite d'un conducteur en côte (1), comprenant des moyens (100, 110) pour déterminer le profil de vitesse d'un véhicule de manière continue pendant un processus de conduite en côte, moyens (100, 120, 130) pour identifier des formes d'action prises par le conducteur du véhicule pendant ledit processus, et des moyens (100, 110, 120, 130, 140, 150, 160) pour utiliser des vitesses de véhicule provenant du modèle de vitesse ainsi défini comme une base pour déterminer une évaluation des actions identifiées comme ayant été entreprises par le conducteur, dans lequel le système :

   - lesdites vitesses de véhicule résultant du modèle de vitesse ainsi défini comprennent la vitesse lors de la réduction de la mobilisation de puissance ($v_{cut}$) et la vitesse la plus élevée ($v_{max}$ ) et la vitesse la plus basse ($v_{min}$) respectives pendant le processus de conduite en côte ; le procédé étant **caractérisé par** :
   - l'occurrence d'un freinage pendant le processus de conduite en côte à la vitesse la plus élevée ($V_{max}$) est représentée comme une augmentation de vitesse théorique correspondant à l'énergie de freinage ($W_{brake}$) ;
   - la détermination de ladite évaluation est basée sur au moins la vitesse ($v_{cut}$ ) lors de la réduction de la mobilisation de puissance et ladite vitesse la plus basse ($V_{min}$) pendant le processus de conduite en côte ;
   - la détermination de ladite évaluation est basée sur une réduction de vitesse souhaitée ($v_{req}$) et une réduction de vitesse réelle ($v_{dec}$) ; et
   - ladite réduction de vitesse réelle ($V_{dec}$) est définie comme $V_{dec}=v_{cut}-V_{min}$.

7. Système selon la revendication 6, dans lequel lesdites formes d'action comprennent la réduction de la mobilisation de puissance et/ou la désactivation de la fonction de régulation de vitesse du véhicule.

8. Système selon la revendication 6 ou 7, dans lequel ledit processus de conduite en côte est agencé pour être défini par des actions sous la forme d'une réduction de la mobilisation de la puissance et de son augmentation ultérieure ou d'un parcours en amont ultérieur pendant un certain temps, ou d'un freinage ultérieur sur une section sensiblement plane ou après un certain temps prédéterminé.

9. Système selon l'une quelconque des revendications 6 à 8, dans lequel l'évaluation des actions du conducteur est exprimée sous la forme d'une évaluation $g=v_{dec}/v_{req}*100$ .

10. Système selon l'une quelconque des revendications 6 à 9, dans lequel le comportement du conducteur n'est pas évalué si l'une quelconque des circonstances suivantes est appliquée :

   - l'augmentation de vitesse $v_{max}$-$v_{min}$ en dessous d'une valeur prédéterminée,
   - l'énergie gagnée ($W_{res}$) en côte ne dépassant pas une valeur prédéterminée,
   - la vitesse initiale du véhicule ($V_{cut}$) ne dépassant pas une valeur prédéterminée, et
   - la vitesse finale ($V_{max}$) ne dépassant pas une valeur prédéterminée.

11. Véhicule à moteur (1) pourvu d'un système (1) selon l'une quelconque des revendications 6 à 10.

12. Programme informatique (P) pour l'évaluation du comportement de conducteurs en conduite en côte, lequel programme (P) comprend un code de programme qui, lorsqu'il est exécuté par une unité de commande électronique (100) ou un autre ordinateur (500) connecté à l'unité de commande électronique (100), permet à l'unité de commande électronique (100) d'exécuter des étapes selon les revendications 1 à 5.

13. Support de stockage numérique qui stocke le programme informatique selon la revendication 12.

Fig. 1

Fig. 2

**Fig. 3**

START

S1 — DETERMINE VEHICLE SPEED PATTERN CONTINUOUSLY DURING HILLTOP DRIVING PROCESS

S2 — IDENTIFY FORMS OF ACTION TAKEN BY VEHICLE DRIVER DURING SAID HILLTOP DRIVING PROCESS

S3 — USE VEHICLE SPEEDS ARISING FROM SPEED PATTERN THUS DEFINED AS BASIS FOR DETERMINING RESULTS OF ACTIONS IDENTIFIED AS HAVING BEEN TAKEN BY DRIVER

END

Fig. 4

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010059109 A1